# EUROPEAN PATENT SPECIFICATION

(11) **EP 2 568 320 B1**
(45) Date of publication and mention of the grant of the patent: **13.05.2020**
(21) Application number: 12183099.6
(22) Date of filing: 05.09.2012
(51) Int. Cl.: F21S 43/245, G02B 6/00, F21V 8/00, B60Q 1/00, B60Q 1/26

(54) **Vehicle lamp**
Fahrzeugleuchte
Lampe de véhicule

(30) Priority: 07.09.2011 JP 2011194839
(43) Date of publication of application: 13.03.2013
(73) Proprietor: Koito Manufacturing Co., Ltd., Tokyo 108-8711 (JP)
(72) Inventor: Ishihara, Yuuji, Shizuoka (JP); Satou, Yasushi, Shizuoka (JP)
(74) Representative: Hoffmann Eitle

(56) References cited:
- WO-A1-2011/070161
- JP-A- 2006 236 588
- JP-A- 2008 147 032
- JP-A- 2010 050 008
- JP-A- 2010 052 442
- JP-A- 2010 176 982
- JP-A- 2011 076 858
- US-A1- 2004 047 161
- US-A1- 2004 130 904
- US-A1- 2009 027 911

## Description

### BACKGROUND

### Technical Field

The present invention relates to a vehicle lamp for an automobile or the like, and more particularly, to a vehicle lamp that controls the distribution of light by an optical element such as an inner lens and emits the light to the front side of the lamp.

### Background Art

A vehicle lamp where a second stop lamp is adjacently disposed in a rear combination lamp where a turn signal lamp and a tail and stop lamp are integrated has been known in the past (for example, see JP-A-2002-50211).

In the second stop lamp, a lamp chamber is formed by a lamp body and an outer lens mounted on a front opening of the lamp body, a plurality of light-emitting diodes as a light source and an inner lens are disposed in the lamp chamber, and an inner lens is disposed in front of the light-emitting diodes.

Meanwhile, the vehicle lamp is adapted so that the lamp is divided into a plurality of light-emitting regions and each of the light-emitting regions functions as, for example, a turn signal lamp and a tail and stop lamp. However, since the outer edge portions of the respective light-emitting regions of the vehicle lamp are not clear, there is room for the improvement of designability.

Moreover, the documents US 2004/0047161 A1, JP 2010-176982 A, US 2004/130904 A1 and JP 2010-052442 A disclose similar vehicle lamps and form part of the prior art. Document US 2004/0047161 A1 discloses the preamble of claim 1 of the present invention.

### SUMMARY OF THE INVENTION

An illustrative object of the invention is to provide a vehicle lamp that has excellent designability where outer edges of light-emitting regions are clear by making boundary portions of the light-emitting regions clear.

According to one or more illustrative aspect of the present invention, there is provided a vehicle lamp. The vehicle lamp includes: a first light source (8) configured to emit first light in a front direction of the vehicle lamp; a second light source (9) configured to emit second light; and an optical element (10) disposed in front of the first and second light sources. The optical element includes: a transparent member (6) that transmits the first light in the front direction so as to form a first light distribution pattern of the first light; and a first light guide (7) that guides the second light in the front direction so as to form a second light distribution patten of the second light. The first light guide includes: an end surface (15) which the second light enters; a rear surface having a plurality of steps (17), wherein the steps are configured to reflect the second light in the front direction; and a front surface (16) opposite to the rear surface, wherein the second light reflected by the steps is outputted from the front surface. The first light guide is provided along an outer periphery of the transparent member, wherein the first light source and the second light source are semiconductor light-emitting elements, the first light source and the second light source are disposed on a same substrate, the optical element further comprises a second light guide (14) disposed between the second light source and the first light guide so as to guide the second light emitted from the second light source to the end surface of the first light guide, and the second light guide is provided in front of the second light source and is formed to extend to the front side of the vehicle lamp.

According to the vehicle lamp having the above-mentioned structure, it is possible to reflect the light, which leaks rearward from the reflective step element, to the front side by the reflector. Accordingly, it is possible to increase the use efficiency of the light of the vehicle lamp.

### BRIEF DESCRIPTION OF THE DRAWINGS

Fig. 1 is a front view of a vehicle lamp according to an embodiment of the invention;
Fig. 2 is a cross-sectional view taken along line II-II of Fig. 1;
Fig. 3 is a front view of a first inner lens of Fig. 1;
Fig. 4 is a cross-sectional view taken along line IV-IV of Fig. 3;
Fig. 5 is an enlarged view, which shows the path of light of a second LED, of main parts of Fig. 2;
Fig. 6 is a view showing the path of light of a first LED; and
Fig. 7 is a view showing the path of light of the second LED.

### DETAILED DESCRIPTION

Hereinafter, the same or equivalent components, members, and signals, which are shown in the respective drawings, are denoted by the same reference numerals, and the repeated description thereof will be appropriately omitted. Further, some of members, which are not important in the description, will be omitted in the respective drawings.

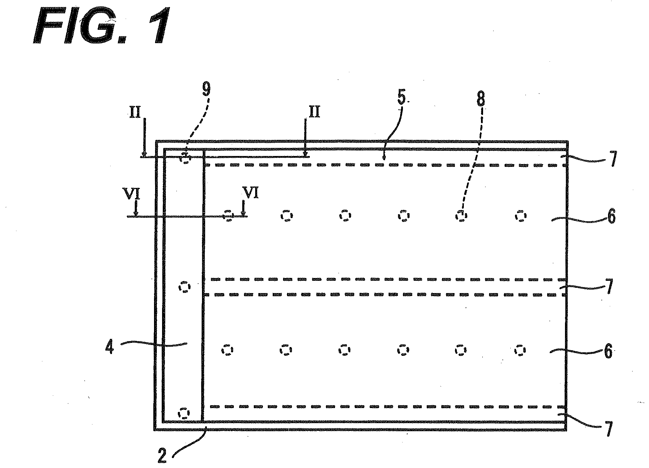

A vehicle lamp according to an embodiment of the invention will be described below with reference to Figs. 1 to 7.

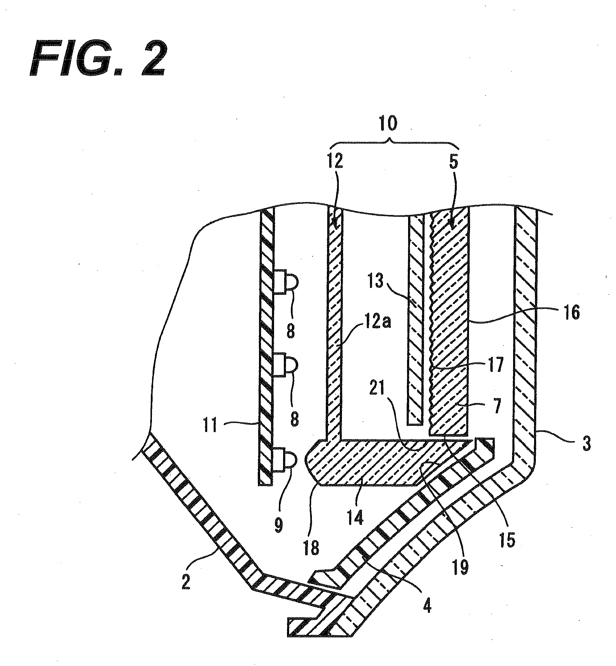

Fig. 1 is a front view of a vehicle lamp according to an embodiment of the invention, and Fig. 2 is a cross-sectional view taken along line II-II of Fig. 1. As shown in Figs. 1 and 2, the vehicle lamp includes a lamp body 2 that is opened to the front side of the lamp, is fixed to a vehicle body, and is made of a resin; and a colorless and transparent outer cover 3 that is mounted so as to cover an opening portion of the lamp body 2. The lamp body 2 and the outer cover 3 form a lamp chamber, and a single LED substrate 11, an optical element 10, and an extension 4 are disposed in the lamp chamber.

The optical element 10 is a member made of a transparent resin such as an acrylic resin, and is disposed on the rear surface of the outer cover 3. The optical element 10 includes a first inner lens 5, and a second inner lens 12 that is disposed between the first inner lens 5 and the LED substrate 11. The first and second inner lenses 5 and 12 are formed separately.

The first inner lens 5 is a member that is integrally formed in a substantially flat plate. The first inner lens 5 includes transparent members 6 that extend in a left and right direction, and linear light guides 7 that are adjacent to the transparent members 6. A reflector 13, which is formed in a linear shape, is disposed to face the rear surfaces of the light guides 7. Further, the second inner lens 12 is also a member that is integrally formed in the shape of a substantially flat plate, and is disposed so as to face the first inner lens 5.

A plurality of first LEDs (first light sources) 8 and a plurality of second LEDs (second light sources) 9 are mounted on the LED substrate 11 so as to face the front face of the lamp. The first LEDs 8 are disposed to face the rear surfaces of the transparent members 6, and the second LEDs 9 are disposed in the vicinity of the side end portions of the light guides 7.

The extension 4 is disposed between the outer cover 3 and the front portion of the optical element 10 that is formed in the vicinity of the side end portion of the optical element 10. The front surface of the extension 4 is decorated by metal deposition or the like, and conceals the vicinity of the side end portion of the optical element 10 and the second LEDs 9.

The first and second inner lenses 5 and 12 will be described in detail below.

### (First inner lens 5)

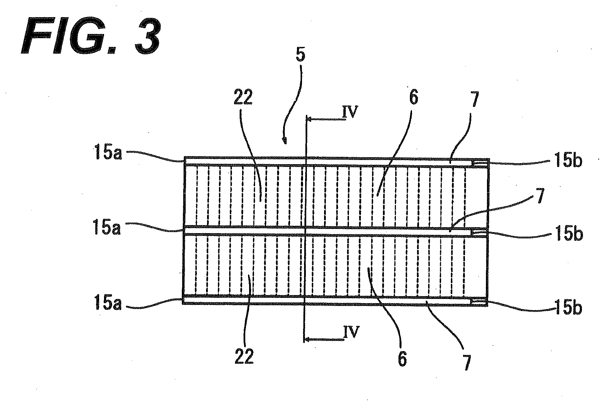

Fig. 3 is a back view of the first inner lens 5. The transparent members 6, which are wide in the up and down direction, and the light guides 7, which are narrower than the transparent members 6, are integrally formed in the first inner lens 5 having the shape of a flat plate.

The transparent members 6 are regions that extend in the left and right direction and have the shape of a flat plate. Further, first diffusing elements 22, which are formed of a plurality of cylindrical lenses extending in the up and down direction, are formed on the rear surfaces of the transparent members 6. Accordingly, the transparent members 6 diffuse the light, which is emitted from the first LEDs 8 disposed on the rear side, and transmit the light forward.

The light guides 7 are formed in the shape of lines extending along the outer edges of the transparent members 6 in the left and right direction. Accordingly, the vehicle lamp has an appearance where the plurality of (two in the embodiments shown in the drawings) transparent members 6 arranged in a vertical direction are divided by the light guides 7. Further, first incident surfaces (incident elements) 15a and 15b where the light emitted from the second LEDs 9 enters are formed at the side end portions of the light guides 7, respectively.

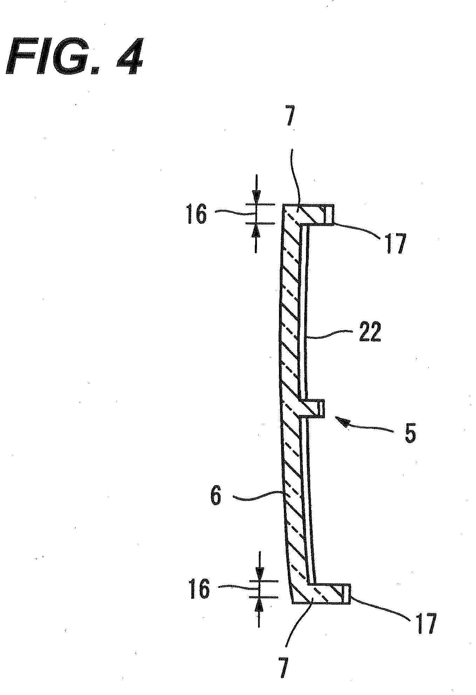

Fig. 4 is a cross-sectional view taken along line IV-IV of Fig. 3, and shows the cross-section of the first inner lens 5. Light-emitting surfaces (light-emitting elements) 16 are formed on the front surfaces of the light guides 7, and reflective steps (reflective step elements) 17 are formed on the rear surfaces of the light-emitting surfaces 16. The reflective steps 17 are formed of a plurality of triangular steps as shown in Fig. 2, and include a plurality of reflective surfaces that are inclined in a predetermined direction.

Moreover, the light-emitting surfaces 16 that are the front surfaces of the transparent members 6 and the front surfaces of the light guides 7 are formed of flat surfaces that are continuous with each other. Accordingly, the entire front surface of the first inner lens 5 is formed of a flat surface. Further, the light guides 7 are formed so as to protrude rearward from the front surface of the first inner lens 5. The thickness of the light guide 7 (the thickness in the front and rear direction of the lamp) is larger than that of the transparent member 6 that is formed in the shape of a plate. Accordingly, the light guide 7 has an appearance with a sense of depth as compared to the transparent member 6.

The transparent members 6, which are formed in the first inner lens 5 as described above, transmit the light, which is emitted from the first LEDs 8 disposed on the rear thereof, to the front side of the lamp. Further, the light emitted from the second LEDs 9 enters the first incident surfaces 15a and 15b, is reflected by the reflective steps 17, and is projected to the front side of the lamp from the light-emitting surfaces 16. Accordingly, the light guides 7 linearly guide the light, which is emitted from the second LEDs 9, along the outer edges of the transparent members 6.

### (Second inner lens 12)

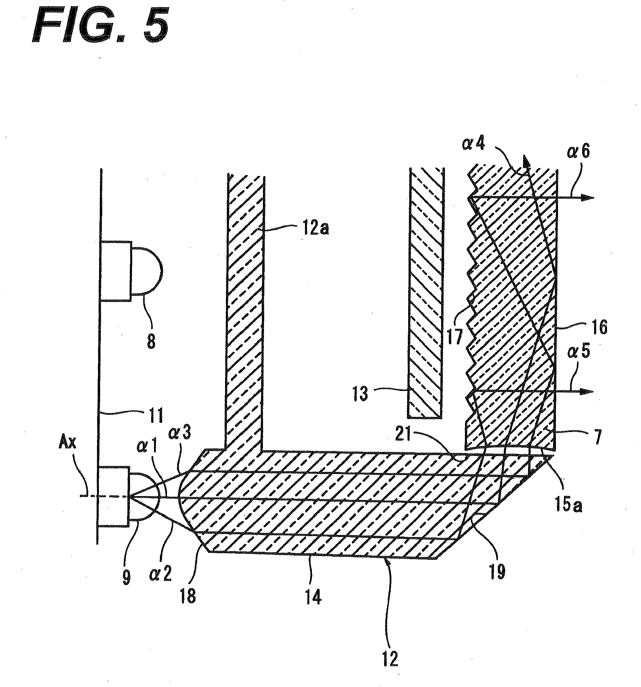

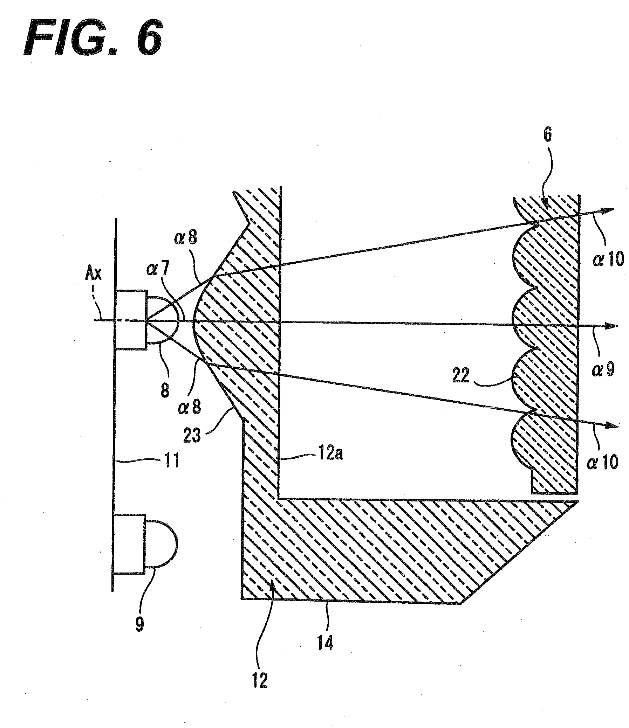

Fig. 5 is an enlarged view of main parts of the first and second inner lenses 5 and 12 of Fig. 2, and Fig. 6 is a cross-sectional view taken along line VI-VI of Fig. 1.

The second inner lens 12 is a member that is integrally made of a transparent resin and has the shape of a flat plate, and includes light guide elements 14 and a transparent element 12a. The light guide elements 14 are provided in front of the second LEDs 9. The transparent element 12a is provided in front of the LED substrate 11 and has the shape of a flat plate. Second diffusing elements 23 are formed on the transparent element 12a at the positions corresponding to the first LEDs 8.

The light guide elements 14 are members that are formed at the side end portions of the transparent element 12a so as to protrude toward the front side of the lamp. Further, the light guide elements 14 are disposed between the second LEDs 9 and the first incident surfaces 15a and 15b of the first inner lens 5, and efficiently make the light, which is emitted from the second LEDs 9, enter the first incident surfaces 15a and 15b of the light guides 7.

The light guide element 14 includes a convex second incident surface 18 where the light of the second LEDs 9 enters; a reflective surface 19 that reflects the light, which has entered, toward the first inner lens 5; and an emission surface 21 that emits light toward the first inner lens 5. The reflective surface 19 is a surface that is inclined to internally reflect the light of the second LEDs 9 so that the incident angle of the light emitted from the second LEDs 9 becomes equal to or larger than a critical angle.

As shown in Fig. 6, the second diffusing elements 23 are formed on the transparent element 12a at the positions corresponding to the first LEDs 8. The second diffusing elements 23 are formed of convex lenses that diffuse the light emitted from the first LEDs 8 and project the light forward. Meanwhile, the second diffusing elements 23 are disposed so that the apexes of the convex surfaces of the second diffusing elements 23 face the first LEDs 8.

### (Path of light of second LED 9)

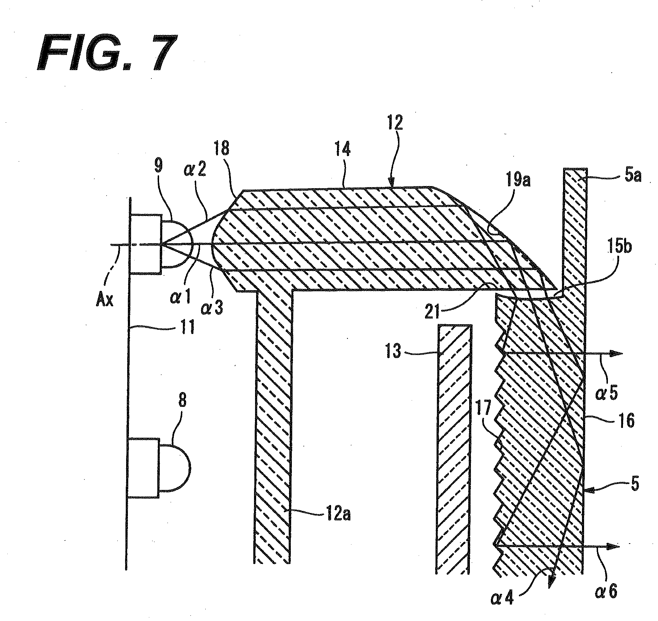

Next, the paths of lights α1 to α3 emitted from the second LED 9 will be described with reference to Figs. 5 and 7. Fig. 5 is a view showing the paths of the lights of the second LED 9 that enter the left first incident surface 15a shown in Fig. 3. Fig. 7 is a view showing the paths of the lights of the second LED 9 that enter the right first incident surface 15b shown in Fig. 3.

As shown in Fig. 5, the front end portion of the light guide element 14, which makes the lights emitted from the second LED 9 enter the left first incident surface 15a of Fig. 3, is formed to protrude forward to the light-emitting surface 16 of the first inner lens 5. A reflective surface 19 having the shape of an inclined flat surface is formed at the front end portion of the light guide element 14.

Among the lights emitted from the second LED 9, the light α1 that is emitted along an emission axis Ax of the second LED 9 enters the light guide element 14 from the center of the second incident surface 18 and travels straight toward the reflective surface 19. Further, the light α1 is internally reflected by the reflective surface 19 and is emitted from the emission surface 21. After that, the light α1 enters the light guide 7 from the first incident surface 15a, and is guided as a light α4 in the extending direction of the light guide 7 while being internally reflected by the light-emitting surface 16.

Furthermore, among the lights emitted from the second LED 9, the lights α2 and α3 that enter the light guide element from the outer peripheral portions of the second incident surface 18 and have large emission angles travel straight toward the reflective surface 19. Moreover, the lights α2 and α3 are internally reflected by the reflective surface 19 and are emitted from the emission surface 21. After that, the light α2 enters the light guide 7 from the first incident surface 15a, is internally reflected by the reflective step 17, and is emitted as a light α5 from the light-emitting surface 16. Further, the light α3 enters the light guide from the first incident surface 15a, is internally reflected again by the reflective step 17 after being internally reflected by the light-emitting surface 16, and is emitted as a light α6 from the light-emitting surface 16. Accordingly, it is possible to make the light-emitting surface 16 of the long and thin light guide 7 of the first inner lens 5 emit light in the shape of a line.

Meanwhile, since the reflector 13 is provided in the rear of the reflective step 17, light leaking rearward from the reflective step 17 is reflected to the front side of the lamp. Accordingly, it is possible to increase the use efficiency of the light of the vehicle lamp and to make the light guides 7 emit bright light.

As shown in Fig. 7, the front end portion of the light guide element 14, which makes the lights emitted from the second LED 9 enter the right first incident surface 15b of Fig. 3, extends to the rear surface of the light-emitting surface 16 of the first inner lens 5. A reflective surface 19a having the shape of an inclined concave surface is formed at the front end portion of the light guide element 14.

Further, an extension portion 5a, which extends laterally from the light guide 7, is formed at the first inner lens 5. The extension portion 5a extends laterally to a position where the extension portion covers the reflective surface 19a in front view. Furthermore, a reflective step 17 is formed on the rear surface of the extension portion 5a so that the second LED 9 cannot be visually recognized from the front side of the lamp. Since the reflective surface 19a and the second LED 9 are covered with the extension portion 5a from the front side as described above, the extension 4 may be omitted. In addition, since the thickness of the extension portion 5a of the first inner lens 5 in the front and rear direction is set to be small, the first incident surface 15b is formed. Accordingly, the first incident surface 15b is formed not on the outermost end of the light guide 7 but on the side surface of the light guide 7.

Further, the reflective surface 19a is formed of a paraboloid of revolution. A focal point of the reflective surface 19a is set in the vicinity of the first incident surface 15b. Accordingly, light reflected by the reflective surface 19a enters the light guide 7 after being concentrated in the vicinity of the first incident surface 15b. For this reason, it is possible to efficiently make the light, which is emitted from the second LED 9, enter the light guide 7.

Among the lights emitted from the second LED 9, the light α1 that is emitted along the emission axis Ax of the second LED 9 enters the light guide element 14 from the center of the second incident surface 18 and travels straight toward the reflective surface 19a. Further, the light α1 is internally reflected by the reflective surface 19a and is emitted from the emission surface 21. After that, the light α1 enters the light guide 7 from the first incident surface 15b, and is guided as a light a4 in the extending direction of the light guide 7 while being internally reflected by the light-emitting surface 16.

Furthermore, among the lights emitted from the second LED 9, the lights α2 and α3 that enter the light guide element from the outer peripheral portions of the second incident surface 18 and have large emission angles travel straight toward the reflective surface 19a. Moreover, the lights α2 and α3 are internally reflected by the reflective surface 19a and are emitted from the emission surface 21. After that, the light α2 enters the light guide 7 from the first incident surface 15b, is internally reflected by the reflective step 17, and is emitted as a light α5 from the light-emitting surface 16. Further, the light α3 enters the light guide from the first incident surface 15b, is internally reflected again by the reflective step 17 after being internally reflected by the light-emitting surface 16, and is emitted as a light α6 from the light-emitting surface 16. Accordingly, it is possible to make the light-emitting surface 16 of the long and thin light guide 7 of the first inner lens 5 emit light in the shape of a line.

### (Path of light of first LED 8)

Next, the paths of lights α7 and α8 emitted from the first LED 8 will be described with reference to Fig. 6.

Among the lights emitted from the first LED 8, the light α7 that is emitted along an emission axis Ax of the first LED 8 travels straight along the center of the corresponding second diffusing element 23 of the second inner lens 12. Furthermore, among the lights emitted from the first LED 8, the light α8 that deviates from the emission axis Ax of the first LED 8 and has a large emission angle enters the second diffusing element 23 and is diffused.

Moreover, the lights α7 and α8 are further diffused to the left and right of the lamp by the first diffusing element 22 of the transparent member 6, which is formed of a plurality of cylindrical lenses, and are emitted to the front side of the lamp. Accordingly, it is possible to make the transparent member 6, which has the shape of a flat plate, of the first inner lens 5 uniformly emit light.

As described above, according to the vehicle lamp of this embodiment, it is possible to make the transparent members 6 uniformly emit light by the first LEDs 8 and to make the light guides 7, which are formed adjacent to the transparent members 6, guide light in a linear shape by the light, which is emitted from the second LEDs 9, by turning on the first and second LEDs 8 and 9 at the same time. Accordingly, there is provided a vehicle lamp of which boundary portions of the transparent members 6 are emphasized and which has an excellent designability.

Further, according to the vehicle lamp of this embodiment, the light emitted from the second LEDs 9 is guided to the incident surfaces 15a and 15b by the light guide element 14. Accordingly, even though the positions of the first incident surfaces 15a and 15b of the light guide 7 relative to the second LEDs 9 are changed, it is possible to reliably guide the light, which is emitted from the second LEDs 9, to the incident surfaces 15a and 15b by the light guide element 14. Accordingly, it is possible to increase the degree of freedom in the design of the vehicle lamp. Meanwhile, the light guide element 14 has been formed to extend straight to the front side from the second LED 9 in the above-mentioned embodiment. However, as long as the light of the second LEDs 9 can be guided to the incident surfaces 15a and 15b, the shape of the light guide element 14 may be freely set.

Furthermore, according to the vehicle lamp of this embodiment, the second LEDs 9 and the light guide element 14 are concealed in front view by the extension 4. Accordingly, the second LEDs 9 and the light guide element 14 are not directly visually recognized from the outside, and the light emitted from the second LEDs 9 is visually recognized as only the light guides 7 that emit light in the shape of lines. Therefore, it is possible to further improve the designability of the vehicle lamp. However, the extension 4 may be disposed so that only one of the light guide element 14 and the second LED 9 is concealed according to a positional relationship between the light guide element 14 and the second LED 9 or the shape of the light guide element 14.

Moreover, according to the vehicle lamp of this embodiment, the first and second LEDs 8 and 9 are mounted on the same LED substrate 11. Since the respective LEDs 8 and 9 are mounted on the vehicle lamp after being mounted on the single LED substrate 11, it is possible to easily assemble the vehicle lamp.

Further, the reflector 13 is provided in the rear of the light guides 7 so as to face reflective step 17. For this reason, it is possible to make the light guides 7 emit bright light by reflecting light, which leaks rearward from the reflective step 17, to the front side of the lamp with the reflector 13.

Meanwhile, the invention is not limited to the above-mentioned embodiment, and may be freely changed and modified appropriately. Moreover, the materials, the shapes, the dimensions, the numerical values, the forms, and the numbers of the respective components of the above-mentioned embodiment, the places where the respective components of the above-mentioned embodiment are disposed, and the like are arbitrary and are not limited as long as the invention can be achieved.

For example, the first incident surfaces 15a and 15b have the shape of a concave surface in the above-mentioned embodiment, but the invention is not limited to this example. The first incident surfaces 15a and 15b may be formed in an arbitrary shape, such as the shape of the flat surface parallel to the emission direction of the light of the second LED 9, the shape of the flat surface inclined with respect to the emission direction, or the shape of a continuous serrated prism surface.

Further, an example where the first incident surfaces 15a and 15b having different shapes are formed on the left and right sides of the first inner lens 5 has been described in the above-mentioned embodiment, but the invention is not limited to this example. For example, the left and right first incident surfaces 15a and 15b may have the same shape, and the first incident surfaces 15a and 15b may be formed only on one side of the right and left sides of the first inner lens 5.

Meanwhile, when the first incident surfaces 15a and 15b are formed only on one side of the first inner lens 5, the second LEDs 9 corresponding to the other side of the first inner lens 5 may be omitted. In this case, not an incident surface but a reflective surface may be formed on the other side of the first inner lens 5. The reflective surface may be formed of a deposition surface, a total reflection surface, or a reflex reflector on which a plurality of minute triangular pyramids are disposed. Further, the positions of the left and right first incident surfaces 15a and 15b of the three light guides 7 may be alternately changed.

Meanwhile, when the inclination angles of the reflective surfaces 19 and 19a are in a condition where total reflection does not occur due to a demand for the design of the lamp, reflection surface processing such as Al deposition may be performed on the reflective surfaces 19 and 19a. Moreover, an example where the reflective surface 19 is formed of a flat surface and the reflective surface 19a is formed of a paraboloid of revolution has been described in the above-mentioned embodiment. However, both the reflective surfaces 19 and 19a may be formed of a flat surface or a paraboloid of revolution.

Further, an example where the plurality of cylindrical lenses extending in the up and down direction of the lamp (the up and down direction in Fig. 3) are formed as the first diffusing element 22 has been described in the above-mentioned embodiment, but the invention is not limited to this example. The first diffusing element 22 may be formed to have the shapes of various lenses so that the light emitted from the first LED 8 is concentrated or refracted and is projected forward.

Further, the second diffusing element 23 has been formed of a convex lens, which diffuses the light emitted from the first LED 8 and projects the light forward, in the above-mentioned embodiment, but the invention is not limited to this example. The second diffusing element 23 may be formed to have the shapes of various lenses such as a cylindrical lens so that the light emitted from the first LED 8 is concentrated or refracted and is projected forward.

Furthermore, an example where the transparent members 6 of the first inner lens 5 are formed in the shape of a flat surface has been described in the above-mentioned embodiment. However, the shape of the first inner lens 5 may be variously modified according to the shape of a vehicle on which the lamp is mounted. For example, the first inner lens 5 may be formed in the shape of a curved surface, which is curved in a vertical direction so that the upper portion of the first inner lens is positioned in the rear of the lower portion thereof, so as to correspond to a so-called slant shape where the upper portion of a vehicle recedes rather than the lower portion thereof. Alternatively, the first inner lens 5 may be formed in the shape of a curved surface, which is curved in a horizontal direction so that the side portions of the first inner lens protrudes rearward, so as to correspond to the shape of the corner of a vehicle of which the side portions recede rather than the middle portion thereof.

Moreover, an example where the transparent members 6 extend in the left and right direction and the light guides 7 are provided at the upper and lower end portions and the boundary portions of the two transparent members 6, which are arranged in the vertical direction, so as to be adjacent to the transparent members 6 has been described in the above-mentioned embodiment, but the invention is not limited to this example. For example, the transparent members 6 may extend in the up and down direction or the oblique direction and linear light guides 7 may be formed adjacent to the transparent members 6 so as to extend in the up and down direction or the oblique direction. Further, the outer edges of the transparent members 6 may be formed in the shape of curved lines and the light guides 7 may be formed in the shape of curved lines. Furthermore, an example where the light guides 7 are formed in the shape of lines having the same width in front view has been described. However, the light guides 7 may be formed in a shape where the widths of the lines are locally changed.

Moreover, when the light guides 7 are formed so as to be narrower than the transparent members 6, the outer edges of the transparent members 6 are seen sharp. Accordingly, it is possible to further improve the designability of the vehicle lamp. Further, it is also possible to improve designability by increasing the brightness of the light guides 7 through the reduction of the light-emitting area of the light-emitting surfaces 16 and making the light guides 7 emit light so that the outer edges of the transparent members 6 are emphasized.

Furthermore, the vehicle lamp according to the invention is suitable to be applied to a vehicle lamp that includes a plurality of transparent members 6 having different emission colors or light-emitting patterns. It is possible to provide a vehicle lamp that has superior designability by emphasizing the boundaries of the transparent members 6, which have different colors or light-emitting patterns, with the light guides 7. The features of all dependent claims and embodiments can be combined with each other, as long as they do not contradict each other.

## Claims

1. A vehicle lamp comprising:
a first light source (8) configured to emit first light in a front direction of the vehicle lamp;
a second light source (9) configured to emit second light; and
an optical element (10) disposed in front of the first and second light sources, the optical element comprising:
a transparent member (6) that transmits the first light in the front direction so as to form a first light distribution pattern of the first light; and
a first light guide (7) that guides the second light in the front direction so as to form a second light distribution pattern of the second light, the first light guide comprising:
an end surface (15) which the second light enters;
a rear surface having a plurality of steps (17), wherein the steps are configured to reflect the second light in the front direction; and
a front surface (16) opposite to the rear surface, wherein the second light reflected by the steps is outputted from the front surface,
wherein the first light guide (7) is provided along an outer periphery of the transparent member (6),
**characterized in that**
the first light source (8) and the second light source (9) are semiconductor light-emitting elements,
the first light source and the second light source are disposed on a same substrate,
the optical element (10) further comprises a second light guide (14) disposed between the second light source (9) and the first light guide (7) so as to guide the second light emitted from the second light source to the end surface of the first light guide, and
the second light guide (14) is provided in front of the second light source (9) and is formed to extend to the front side of the vehicle lamp.

2. The vehicle lamp according to claim 1, further comprising:
an extension member (4) configured to cover at least one of the second light source (9) and the second light guide (14) such that said at least one of the second light source and the second light guide cannot be seen from a front view of the vehicle lamp.

3. The vehicle lamp according to claim 2,
wherein the first light source (8) is a plurality of semiconductor light-emitting elements.

4. The vehicle lamp according to any one of claims 1 to 3, further comprising:
a reflector (13) disposed to face the rear surface of the first light guide (7) and configured to reflect a part of the second light outputted from the plurality of steps (17) in the front direction.

5. The vehicle lamp according to claim 1, wherein the first light guide (7) is integrally formed with the transparent member (6).

6. The vehicle lamp according to claim 1, wherein the transparent member (6) has a plurality of diffusing elements (22) formed thereon, wherein the diffusing elements are formed of cylindrical lens.

## Patentansprüche

1. Fahrzeugleuchte, umfassend:
eine erste Lichtquelle (8), die konfiguriert ist, um erstes Licht in einer vorderen Richtung der Fahrzeugleuchte zu emittieren;
eine zweite Lichtquelle (9), die konfiguriert ist, um zweites Licht zu emittieren; und
ein optisches Element (10), das vor der ersten und der zweiten Lichtquelle angeordnet ist, wobei das optische Element umfasst:
einen transparenten Bestandteil (6), der das erste Licht in der vorderen Richtung überträgt, um ein erstes Lichtverteilungsmuster des ersten Lichts zu bilden; und
einen ersten Lichtleiter (7), der das zweite Licht in der vorderen Richtung führt, um ein zweites Lichtverteilungsmuster des zweiten Lichts zu bilden, wobei der erste Lichtleiter umfasst:
eine Endoberfläche (15), in die das zweite Licht eintritt;
eine hintere Oberfläche, die eine Vielzahl von Stufen (17) aufweist, wobei die Stufen konfiguriert sind, um das zweite Licht in der vorderen Richtung zu reflektieren; und
eine vordere Oberfläche (16), die der hinteren Oberfläche gegenüberliegt, wobei das von den Stufen reflektierte zweite Licht von der vorderen Oberfläche ausgegeben wird,
wobei der erste Lichtleiter (7) entlang eines äußeren Umfangs des transparenten Bestandteils (6) bereitgestellt ist,
**dadurch gekennzeichnet, dass**
die erste Lichtquelle (8) und die zweite Lichtquelle (9) lichtemittierende Halbleiterelemente sind,
die erste Lichtquelle und die zweite Lichtquelle auf einem selben Substrat angeordnet sind,
das optische Element (10) weiter einen zweiten Lichtleiter (14) umfasst, der zwischen der zweiten Lichtquelle (9) und dem ersten Lichtleiter (7) angeordnet ist, um das von der zweiten Lichtquelle zu der Endoberfläche des ersten Lichtleiters emittierte zweite Licht zu führen, und
der zweite Lichtleiter (14) vor der zweiten Lichtquelle (9) bereitgestellt ist und gebildet ist, um sich von der Vorderseite der Fahrzeugleuchte aus zu erstrecken.

2. Fahrzeugleuchte nach Anspruch 1, weiter umfassend:
einen Verlängerungsbestandteil (4), der konfiguriert ist, um zumindest eines von der zweiten Lichtquelle (9) und dem zweiten Lichtleiter (14) zu bedecken, sodass das zumindest eine von der zweiten Lichtquelle und dem zweiten Lichtleiter von einer Vorderansicht der Fahrzeugleuchte aus nicht sichtbar ist.

3. Fahrzeugleuchte nach Anspruch 2,
wobei die erste Lichtquelle (8) eine Vielzahl von lichtemittierenden Halbleiterelementen ist.

4. Fahrzeugleuchte nach einem der Ansprüche 1 bis 3, weiter umfassend:
einen Reflektor (13), der angeordnet ist, um der hinteren Oberfläche des ersten Lichtleiters (7) zugewandt zu sein und
der konfiguriert ist, um einen Teil des zweiten Lichts, das von der Vielzahl von Stufen (17) in der vorderen Richtung ausgegeben wird, zu reflektieren.

5. Fahrzeugleuchte nach Anspruch 1, wobei der erste Lichtleiter (7) einstückig mit dem transparenten Bestandteil (6) gebildet ist.

6. Fahrzeugleuchte nach Anspruch 1, wobei der transparente Bestandteil (6) eine Vielzahl von darauf gebildeten Diffusionselementen (22) aufweist, wobei die Diffusionselemente aus einer zylindrischen Linse gebildet sind.

## Revendications

1. Lampe de véhicule comprenant :
une première source de lumière (8) configurée pour émettre une première lumière dans une direction avant de la lampe de véhicule ;
une seconde source de lumière (9) configurée pour émettre une seconde lumière ; et
un élément optique (10) disposé devant les première et seconde sources de lumière, l'élément optique comprenant :
un organe transparent (6) qui transmet la première lumière dans la direction avant de façon à former un premier motif de distribution de lumière de la première lumière ; et
un premier guide de lumière (7) qui guide la seconde lumière dans la direction avant de façon à former un second motif de distribution de lumière de la seconde lumière, le premier guide de lumière comprenant :
une surface d'extrémité (15) dans laquelle entre la seconde lumière ;
une surface arrière ayant une pluralité de crans (17), dans laquelle les crans sont configurés pour réfléchir la seconde lumière dans la direction avant ; et
une surface avant (16) opposée à la surface arrière, dans laquelle la seconde lumière réfléchie par les crans est fournie en sortie depuis la surface avant,
dans laquelle le premier guide de lumière (7) est prévu le long d'une périphérie externe de l'organe transparent (6),
**caractérisée en ce que**
la première source de lumière (8) et la seconde source de lumière (9) sont des éléments électroluminescents à semi-conducteur,
la première source de lumière et la seconde source de lumière sont disposées sur un même substrat,
l'élément optique (10) comprend en outre un second guide de lumière (14) disposé entre la seconde source de lumière (9) et le premier guide de lumière (7) de façon à guider la seconde lumière émise de la seconde source de lumière à la surface d'extrémité du premier guide de lumière, et le second guide de lumière (14) est prévu devant la seconde source de lumière (9) et est formé pour s'étendre jusqu'au côté avant de la lampe de véhicule.

2. Lampe de véhicule selon la revendication 1, comprenant en outre :
un organe d'extension (4) configuré pour couvrir au moins l'un de la seconde source de lumière (9) et du second guide de lumière (14) de sorte que ledit au moins un de la seconde source de lumière et du second guide de lumière ne puisse pas être vu depuis une vue avant de la lampe de véhicule.

3. Lampe de véhicule selon la revendication 2,
dans laquelle la première source de lumière (8) est une pluralité d'éléments électroluminescents à semi-conducteur.

4. Lampe de véhicule selon l'une quelconque des revendications 1 à 3, comprenant en outre :
un réflecteur (13) disposé pour faire face à la surface arrière du premier guide de lumière (7) et configuré pour réfléchir une partie de la seconde lumière fournie en sortie depuis la pluralité de crans (17) dans la direction avant.

5. Lampe de véhicule selon la revendication 1, dans laquelle le premier guide de lumière (7) est formé d'un seul tenant avec l'organe transparent (6).

6. Lampe de véhicule selon la revendication 1, dans laquelle l'organe transparent (6) a une pluralité d'éléments de diffusion (22) formés sur celui-ci, dans laquelle les éléments de diffusion sont formés d'une lentille cylindrique.
